(19) Europäisches Patentamt
European Patent Office
Office européen des brevets

(11) **EP 2 418 510 B1**

(12) **EUROPÄISCHE PATENTSCHRIFT**

(45) Veröffentlichungstag und Bekanntmachung des Hinweises auf die Patenterteilung:
**29.01.2014 Patentblatt 2014/05**

(51) Int Cl.:
*G01S 13/89* (2006.01)          *G01S 17/89* (2006.01)
*G01S 7/41* (2006.01)          *G01S 7/48* (2006.01)

(21) Anmeldenummer: **10007989.6**

(22) Anmeldetag: **30.07.2010**

(54) **Verfahren zur Beurteilung einer Bodenfläche auf deren Eignung als Landezone oder Rollfläche für Luftfahrzeuge**

Method for evaluating the suitability of a piece of land for a landing zone or taxi surface for airplanes

Procédé d'évaluation d'une surface au sol concernant son caractère approprié en tant que zone d'atterrissage ou surface de roulement pour aéronefs

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**15.02.2012 Patentblatt 2012/07**

(73) Patentinhaber: **EADS Deutschland GmbH**
**85521 Ottobrunn (DE)**

(72) Erfinder:
• **Münsterer, Thomas, Dr.**
**88069 Tettnang (DE)**
• **Wegner, Matthias**
**88048 Friedrichshafen (DE)**

(74) Vertreter: **Meel, Thomas**
**EADS Deutschland GmbH**
**Patentabteilung, DS LAIP1**
**88039 Friedrichshafen (DE)**

(56) Entgegenhaltungen:
**EP-A1- 2 166 372          EP-A1- 2 182 326**
**EP-A1- 2 194 361          WO-A2-2008/018906**
**DE-B4-102004 051 625     US-A- 6 167 144**

• **DYLAN KLOMPARENS: "AUTOMATED LANDING SITEEVALUATION FOR SEMI-AUTONOMOUSUNMANNED AERIAL VEHICLES", INTERNET CITATION, 20. August 2008 (2008-08-20), Seiten 1-129, XP002569083, Gefunden im Internet: URL:http:// scholar.lib.vt.edu/theses/avail able/etd-08192008-231631/unrest ricted/Thesis.pdf [gefunden am 2010-02-12]**

**Beschreibung**

Die Erfindung betrifft ein Verfahren zur Beurteilung einer Geländeoberfläche auf deren Eignung als Lande- oder Rollfläche für Luftfahrzeuge.

Bei Landungen unter eingeschränkten Sichtverhältnissen werden zunehmend synthetische Sichtsysteme verwendet. Diese sollen eine möglichst realitätsnahe Darstellung der tatsächlichen Gegebenheiten der Landezone und hierbei insbesondere der Bodenoberfläche bieten. Als Datenquellen dienen entweder Datenbanken mit Kartenmaterial (z.B. DTED-Elevationsdatenbanken) und/oder aktive 3D-Sensoren, die die Landezone vor und/oder während des Landevorgangs vermessen. Diese Daten werden dann numerisch verarbeitet und visualisiert. Die Anwendung derartiger synthetischer Sichtsysteme wurde z.B. für Landungen von Hubschraubern unter Brownout/Whiteout-Bedingungen oder unter anderweitig stark verringerten Sichtbedingungen vorgeschlagen. Dabei ist es entscheidend, dass neben den reinen, möglichst präzisen geometrischen Eigenschaften der Landezone, wie z.B. deren Neigung gegenüber der Horizontebene, auch eventuelle Hindernisse korrekt und positionsgenau dargestellt werden.

Ähnliche Anforderungen gelten für automatische Landesysteme, sowohl für Hubschrauber als auch für Flächenflugzeuge. Auch hier besteht die Notwendigkeit präzise Informationen über die Landezone, bzw. die Landebahn zu gewinnen (Lage im Raum und Beschaffenheit), sowie eine Hindernisfreiheit zu garantieren.

Im Einzelnen ist folgender konkreter Stand der Technik zum Thema bekannt:

DE 10 2004 051 625 B4: In diesem Patent wird ein allgemeiner Ansatz zur generellen Lösung des Brownout-Problems skizziert. Dieses Konzept beinhaltet die Verwendung eines hochauflösenden 3D-Sensors zur Erzeugung einer 3D-Repräsentation der Landezone während des Landeanflugs. Nach Eintritt in die Brownout-Situation werden keine neuen Daten mehr aufgenommen. Vielmehr werden die bestehenden Daten als synthetische Sicht der Landezone mit der Hubschrauberbewegung dargestellt.

In "Beyond Brownout", Aviation Week & Space Technology, April 6, 2009, Seiten 44, 45 wird von einem Projekt berichtet, bei dem eine voll- und teilautomatische Landung unter Brownout-Bedingungen realisiert wurde. Im Rahmen dieses Projekts wurde als Sensor ein scannendes Millimeterwellen-Radar entwickelt und erprobt. Für die erzeugte synthetische Sicht wurden Daten aus einer Geländedatenbank mit den Daten des Millimeterwellen-Radars kombiniert (das entsprechende Verfahren ist in der EP 2 182 326 A1 beschrieben). Wurden vom Sensor Hindernisse in der Landezone erkannt, konnte der Hubschrauber seinen Landeplatz selbstständig oder durch Unterstützung des Piloten ändern.

In der WO 2008/018906 A2 wird ein weiteres Verfahren zur Erzeugung einer synthetischen Sicht zur Pilotenunterstützung beschrieben. Hier bildet eine Terraindatenbank die Basis der synthetischen Sicht. Diese Terraindatenbank wird an ihren Stützstellen durch Echtzeitsensordaten eines oder mehrerer Entfernungssensoren verifiziert und ggf. modifiziert.

Die bekannten Verfahren haben den Nachteil, dass verfügbare 3D-Sensoren nicht in der Lage sind, eine hinreichend genaue räumliche Auflösung der Landefläche zu erreichen. Beschränkend wirken dabei einerseits die Strahldivergenz der verwendeten aktiven Sensoren (Radare oder Ladare) und andererseits die Genauigkeit der Entfernungsmessung. Hinzu kommen noch Fehler der Navigationsanlage, deren Daten zur Georeferenzierung der 3D Daten verwendet wird. Anders als bei topografischen Messflügen, bei denen durch die Verzahnung der Messstrahlen und den senkrechten Messwinkel die Auflösung ausschließlich durch die Entfernungsauflösung des verwendeten 3D-Sensors bestimmt wird, beeinflusst bei der hier betrachteten Anwendung, wegen des schleifenden, spitzen Messwinkels während des Endanflugs, auch die Strahldivergenz die erreichbare räumliche Auflösung wesentlich.

Bei marktverfügbaren sogenannten hochauflösenden Radarsystemen ist die Auflösungsgrenze für die Detektion von Objekten im Nahbereich bei ca. 1 m anzusetzen, bei marktverfügbaren Ladar-Systemen ist sie wegen der geringeren Strahldivergenz zwischen 30 cm und 50 cm. Beide Auflösungen erscheinen aber für eine gefahrlose Landung kritisch. Ein unerkanntes Hindernis von knapp einem Meter würde bei einem landenden Hubschrauber mit hoher Wahrscheinlichkeit zu einer katastrophalen Kollision führen. Selbst ein 40 cm großer Stein oder tiefer Graben könnte bei einem landenden Hubschrauber zum Umstürzen führen.

Die bekannten Systeme basieren darauf, dass aus den Einzelmesswerten der 3D-Sensoren die Bodenoberfläche der Landezone durch Approximation oder Interpolation rechnerisch erzeugt und dann zur Darstellung gebracht wird. Wegen der oben beschriebenen Messungenauigkeiten aufgrund der räumlichen Auflösung der 3D-Sensoren müssen zur synthetischen Darstellung der Bodenfläche durch einzelne Flächenelemente entweder die Messwerte innerhalb eines diskreten, lokalen Flächenelements gemittelt oder mittels anderer Filter oder Verfahren sinnvoll approximiert werden. Dabei entsteht einerseits eine Vergröberung der gemessenen Daten, andererseits wird aber nur so die dargestellte Bodenfläche hinreichend rauschfrei. Die Problematik ist weitgehend unabhängig davon, welche Form die Flächenelemente haben. Im Allgemeinen werden rechteckige oder dreieckige Flächenelemente verwendet, welche sowohl regulär, d.h. mit konstanter Gittergröße, als auch irregulär, d.h. mit wechselnder Gittergröße, sein können. Ein weiteres Problem besteht in der Größe solcher lokalen Flächenelemente, welche maßgeblich die erforderliche Rechenleistung der benötigten Echtzeit-Grafikprozessoren für die Darstellung bestimmt. Typische lokale Flächenelement-Größen bewegen sich im Bereich zwischen einem Meter und einigen Metern Kantenlänge im Nahbereich unter 200 m Entfernung zum Luftfahrzeug. Die Darstellung kleinerer Hindernisse und Bodenunebenheiten könnte nur mit erheblich kleineren lokalen Flächenelementen realisiert werden. Dies würde jedoch einen erheblich größeren Rechenaufwand bedeuten, welcher durch die Echtzeitfähigkeit der zur Verfügung stehenden Hardware begrenzt ist.

In DYLAN KLOMPARENS: "AUTOMATED LANDING SITE EVALUATION FOR SEMI-AUTONOMOUS UNMANNED AERIAL VEHICLES", INTERNET CITATION, 20.August 2008 (2008-08-20), Seiten 1-129, XP002569083, Gefunden im Internet: URL: http://scholar.lib.vt.edu/theses/avail able/etd-08192008-231631/unrestricted/Thesis.pdf ist ein Verfahren beschrieben, bei dem mittels eines 3D Sensors in Form einer Stereokamera die Landezone einer vertikal startenden und landenden Drohne (VTOL UAV) auf deren Eignung als Landefläche untersucht wird. Aus den dreidimensionalen Messwerten werden einzelne Flächenelemente der untersuchten Landezone abgeleitet und deren Orientierung im Raum bestimmt. Unterschiede in der räumlichen Orientierung benachbarter Flächenelemente dienen als Maß für die Rauhigkeit des Geländes, wobei das so ermittelte Maß der Rauhigkeit im Rahmen einer Plausibilitätsprüfung zusätzlich mit weiteren statistischen Eigenschaften der dreidimensionalen Messwerte kombiniert wird.

Der Erfindung liegt die Aufgabe zugrunde, ein gattungsgemäßes Verfahren zu schaffen, mit dem aktuelle und hochgenaue Informationen über die Lage und Beschaffenheit der Landezone bzw. Rollfläche des Luftfahrzeugs gewonnen werden können.

Diese Aufgabe wird mit den Patentansprüchen 1 und 9 gelöst. Vorteilhafte Ausführungen sind Gegenstand von Unteransprüchen.

Mit dem erfindungsgemäßen Verfahren ist es möglich, trotz der beschränkten räumlichen Auflösung der verwendeten 3D-Sensoren durch Überabtastung (d.h. Erzeugung von 3D-Daten, die in mehreren Messzyklen, z.B. mehreren Scans oder, im Falle eines Flash-Ladars, in mehreren Aufnahmen das zu vermessende Gelände wiederholt erfassen) und statistische Bewertung Erkenntnisse über die lokalen Eigenschaften der vermessenen Landezone bzw. Rollfläche zu gewinnen. Diese lokalen Eigenschaften über die Bodenbeschaffenheit führen dann zu einer Klassifikation, die entscheidet, ob diese Fläche zur Landung bzw. als Rollfläche geeignet ist oder nicht. Das Ergebnis kann als zusätzliches Merkmal - entweder als Markierung, als Textur oder als Farbkodierung - jedes korrespondierenden, lokalen Flächenelements in eine synthetische Ansicht der vermessenen Landezone bzw. Rollfläche eingeblendet werden. Die so gewonnene Eigenschaft jedes lokalen Flächenelements kann ebenso an ein automatisiertes Landesystem übermittelt werden, das diese Information zur Planung der Landung heranzieht.

Das erfindungsgemäße Verfahren eignet sich in besonderem Maße für eine Anwendung für Drehflügler, vor allem um die kritische Zustände des so genannten Brown-Out oder White-Outs beim Start oder bei der Landung auf sandigen bzw. schneebedeckten Böden zu meistern.

Das der Erfindung zugrundeliegende Prinzip ist jedoch allgemeingültig und kann ebenso für Flächenflieger eingesetzt werden. In diesem Falle wird die vorgesehene Landepiste des Flächenfliegers in analoger Weise hinsichtlich seiner Beschaffenheit und insbesondere auf das Vorhandensein eines Hindernisses analysiert und bewertet. Der im Vergleich zum Drehflügler im Allgemeinen größere Abstand zwischen Luftfahrzeug und zu vermessender Bodenfläche hat keinen Einfluss auf die erfindungsgemäße Vorgehensweise.

Darüber hinaus kann das hier vorgestellte Verfahren nicht nur im Endanflug eines Luftfahrzeugs zur Bewertung der Landezone bzw. Landepiste zur Anwendung kommen, sondern auch zur Bewertung von Rollwegen und Parkflächen auf Flugplätzen; also während sich das Luftfahrzeug vor dem Start oder nach der Landung am Boden bewegt.

Als 3D-Sensor können alle bekannten radar- oder lasergestützen Sensortypen verwendet werden. Besonders geeignet sind Laserradare sowie hochauflösende Radare, insbesondere Millimeterwellen-Radare.

Die Erfindung wird im Folgenden anhand konkreter Ausführungsbeispiele unter Bezugnahme von Figuren näher erläutert. Sie zeigen:

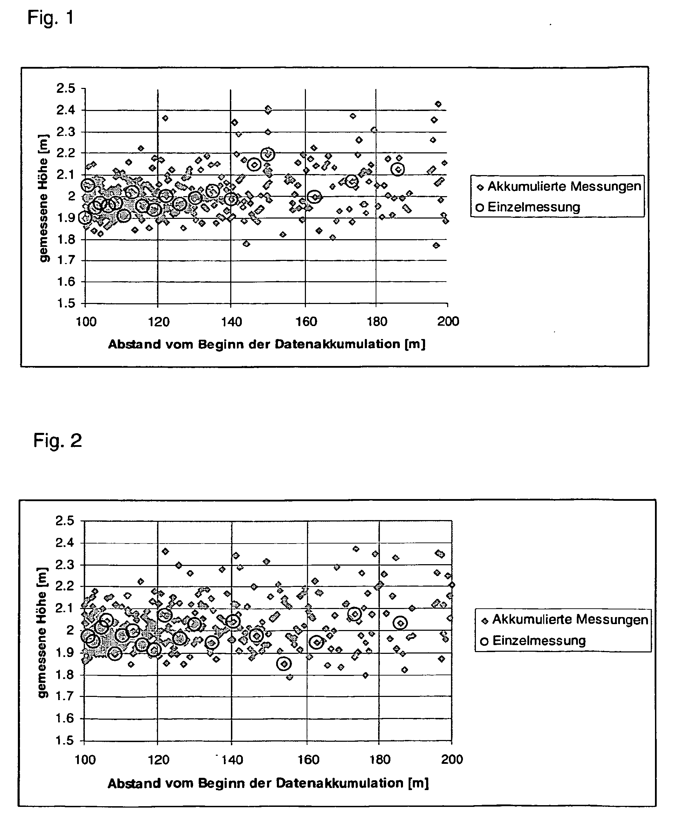

Fig. 1    Monte Carlo Simulation der Messwerte einer ideal ebenen Bodenfläche mit einem quaderförmigen Hindernis (Kantenlänge 0,3 m) bei 150 m, erzeugt während eines Landeanflugs. Es wurden dabei Messfehler durch Ungenau-igkeiten der Navigationseinheit, beschränkte Genauigkeit der Entfernungsmessung und Strahldivergenz des Messstrahls des 3D-Sensors berücksichtigt. Die Menge der rautenförmigen Messpunkte sind das Ergebnis mehrerer aufeinanderfolgender, während des Landeanflugs durchgeführter Scans der Bodenfläche, während die kreisförmigen Messpunkte aus demselben Scan stammen. Die Entfernungsangaben der horizontalen Achse beziehen sich auf den Abstand zwischen 3D-Sensor und betreffendem Punkt der Bodenfläche zum Zeitpunkt des Beginns der Datenakkumulation.

Fig. 2    Monte Carlo Simulation der Messwerte derselben ideal ebenen Fläche wie Fig. 1, jedoch ohne quaderförmiges Hindernis, erzeugt während eines Landeanflugs. Wie in Fig. 1 sind Messfehler durch Ungenauigkeiten der Navi-gationseinheit, beschränkte Genauigkeit der Entfernungsmessung und Strahldivergenz des Messstrahls berücksichtigt.

Fig. 3     Schematische Darstellung der Messwerte einer idealen Bodenfläche mit quaderförmigem Hindernis bei endlicher Messgenauigkeit des 3D-Sensors. Die zugehörigen (idealen) Einzelstrahlen des 3D-Sensors sind jeweils eingezeichnet. Die Messungenauigkeit ist durch die Darstellung eines Messwerts in Form eines Rechtecks H angedeutet, wobei die Länge des Rechtecks die Messungenauigkeit bei der Entfernungsmessung und die Breite des Rechtecks die Messungenauigkeit aufgrund der endlichen Strahldivergenz darstellen soll.

Fig. 4     Monte Carlo Simulation der Messwerte einer idealen Bodenfläche mit einem quaderförmigen Hindernis (30 cm Kantenlänge) bei 100 m Entfernung, erzeugt während eines Landeanflugs. Die gestrichelte Linie stellt den idealen Hindernisverlauf ohne Messungenauigkeiten und Messfehler dar. Mit Pfeilen ist die Zone einer Messwerthäufung und Messwertverringerung durch Schattenwurf am Hindernis markiert.

Fig. 5     Monte Carlo Simulation der Messwerte einer idealen Bodenfläche mit einer quaderförmigen Versenkung (Graben) bei 100 m Entfernung, erzeugt während eines Landeanflugs. Die gestrichelte Linie stellt den idealen Hindernisverlauf ohne Messungenauigkeiten und Messfehler dar. Mit einem Pfeil ist die Zone einer Messwertverringerung durch Schattenwurf markiert.

Fig. 6     Lokale Messwertdichte bei Vorhandensein eines simulierten erhabenen Hindernisses (z.B. Holzkiste) bei 100 m Entfernung.

Fig. 7     Standardabweichung (oberes Diagramm), Schiefheit und Kurtosis (unteres Diagramm) bei Vorhandensein eines simulierten erhabenen Hindernisses (z.B. Holzkiste) bei 100 m Entfernung.

Fig. 8     Erfindungsgemäß ermittelte Rauhigkeit der betrachteten Bodenfläche bei Vorhandensein eines simulierten erhabenen Hindernisses (z.B. Holzkiste) bei 100 m Entfernung.

Fig. 9     Darstellung einer Bodenfläche mit markierten Gebieten erhöhter Rauhigkeit, die sich nicht für die Landung mit einem Luftfahrzeug eignen.

Fig. 10     Darstellung einer Bodenfläche mit markierten Gebieten, die sich für die Landung mit einem Luftfahrzeug eignen, da die gemessene Rauhigkeit in den betreffenden Flächenelementen unter einem bestimmten Wert liegt.

Wie die Fig. 1 und 2 veranschaulichen, versagen bei der Identifikation kleinerer Hindernisse klassische Verfahren der Approximation oder Interpolation der Bodenfläche, da die Messwerte aufgrund der endlichen Auflösungen und der Messungenauigkeiten der 3D-Sensoren um den Idealwert stark streuen.

Bedingt durch den schleifenden, spitzwinkligen Einfall der Messstrahlen im Endanflug (typisch zwischen 10° und 20° in Relation zur Bodenfläche) ergeben sich spezielle Effekte, die gemäß der Erfindung ausgenutzt werden. Dabei wird ein im Folgenden näher erläutertes Maß zur Charakterisierung der Bodenrauhigkeit berechnet.

Das hier vorgeschlagene Verfahren verwendet zur Ermittlung besagter Bodenrauhigkeit eine Kombination von lokal begrenzten statistischen Merkmalen der Messwerte. Der schleifende Einfall der Messstrahlen in Relation zur Bodenoberfläche und den dadurch erzeugten Messdatenlücken aufgrund von Abschattungseffekten durch vorhandene Nichtboden-Objekte (z.B. Steinen oder Gräben) erzeugt eine Veränderung der lokalen Messwertdichten sowie eine Veränderung der statistischen Merkmale höherer Ordnung, wie Varianz, Schiefheit und Kurtosis. Diese statistischen Merkmale sind somit zur Charakterisierung der Bodenfläche hinsichtlich ihrer Eignung als Landeplatz geeignet.

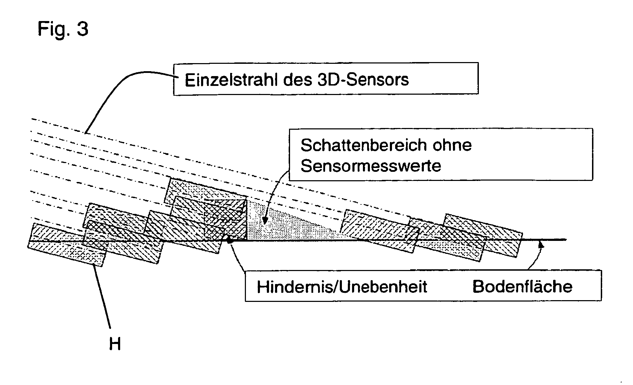

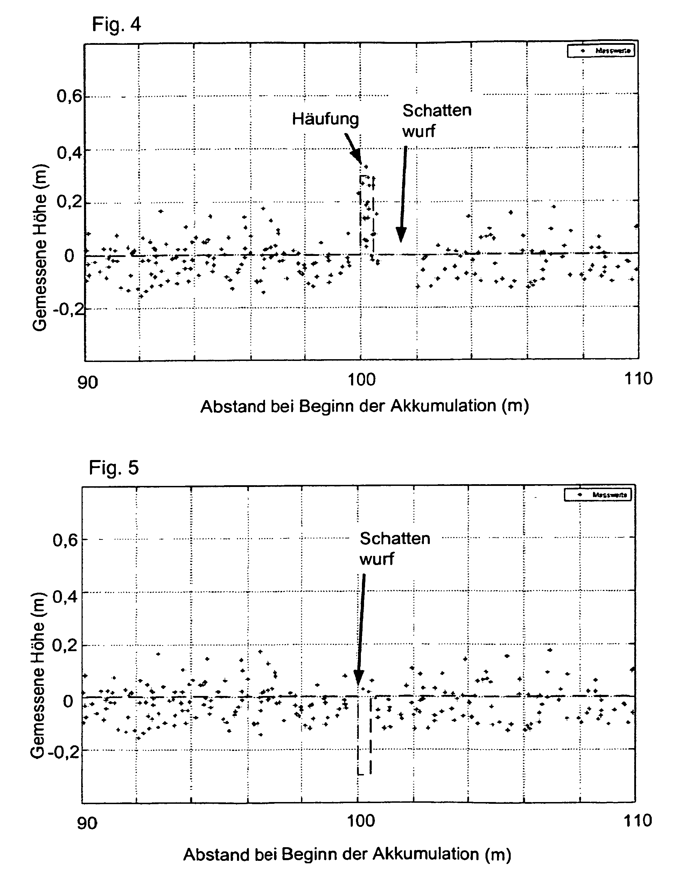

Den Fig. 3 und 4 liegt jeweils eine ideal ebene Bodenfläche mit einem erhabenen Hindernis (z.B. Holzkiste) zugrunde (das Hindernis befindet sich in der Darstellung der Fig. 4 bei einem Koordinatenwert auf der horizontalen Achse von 100 m). Beim Vorhandensein eines erhabenen Hindernisses folgt auf eine Erhöhung der lokalen Messwertdichte zwangsläufig eine entsprechende Verringerung bedingt durch die Messwertlücke im "Schattenbereich" des abgetasteten Hindernisses. Die Prinzipdarstellung der Fig. 3 veranschaulicht diesen Schattenwurf der Sensordaten aufgrund des Hindernisses.

Fig. 4 zeigt die Sensor-Messwerte für die gleiche Situation bei einem simulierten Anflug auf die Bodenfläche. Im Gegensatz zu Fig. 3 wurden die dargestellten Messwerte der Bodenfläche durch mehrmaliges, aufeinanderfolgendes Abscannen der Bodenfläche durch den 3D-Sensor erzeugt, um eine verbesserte Datenbasis für die nachfolgenden statistischen Auswertungen zu gewinnen. Man erkennt, dass sich hinter dem erhabenen Hindernis ein Schattenbereich mit fehlenden Messwerten aufbaut. An der Frontseite eines erhabenen Hindernisses erhöht sich dagegen die Messwertdichte.

Dieses Prinzip der erhöhten Messwertdichte im Falle eines erhabenen Hindernisses gilt umgekehrt auch beim Vorhandensein eines Grabens. Am Ort des Grabens ergibt sich eine Verringerung der Messwertdichte bedingt durch den Schattenwurf an der Grabenflanke. Der Größe des Schattenwurfs ist allerdings i.d.R. geringer. Die Verteilung der Sensormesswerte für diese Situation zeigt die Fig. 5.

Aufgrund dieser Eigenschaften wird gemäß der Erfindung die lokale Messwertdichte, etwa durch gleitende Summation der Messpunkte pro Flächenelement, ermittelt. Hinweise für erhabene Objekte auf der Landefläche ergeben sich aus diesen Werten durch die typische Abfolge von lokaler Messwerthäufung mit darauffolgender lokaler Messwertverringerung. Hinweise auf Gräben ergeben sich wie erläutert aufgrund des umgekehrten Effekts.

Durch Verknüpfung mit weiteren statistischen Eigenschaften der dreidimensionalen Geländedaten, z.B. Varianz, Schiefheit, Kurtosis, wird erfindungsgemäß ein Maß für die lokale Rauhigkeit der Bodenfläche ermittelt, der ein zuverlässiger Indikator für das Vorhandensein von Hindernissen liefert.

Vorteilhaft wird der lokale Rauhigkeitswert R(x) in der Form $R(x) = \sum_{1}^{p} w_i \cdot S_i(x)$ oder

$R(x) = \prod_{1}^{p} w_i \cdot S_i(x)$ über alle $p$ ausgewählten Merkmale $S_i$ (Messwertdichte und weitere statistische Eigenschaften, wie Varianz, Schiefheit, Kurtosis, etc.) berechnet, wobei $w_i$ einen Gewichtungsfaktor für die statistische Eigenschaft $S_i$ beschreibt. Prinzipiell sind auch Kombinationen der beiden vorgeschlagenen Berechnungsmethoden (additiv und multiplikativ) möglich. Der so erhaltene Rauhigkeitswert dient als Eingangsgröße für einen numerischen Klassifikator, der das korrespondierende, lokale Flächenelement aufgrund der Rauhigkeit als geeignet oder ungeeignet zur Landung einstuft. Bei dem vorliegenden, erfindungsgemäßen Berechnungsverfahren sind auch entsprechende Zwischenwerte denkbar, welche diskrete Abstufungen zwischen den beiden Extremwerten (a) "zur Landung geeignet" sowie (b) "zur Landung ungeeignet" berücksichtigen.

Neben den genannten statistischen Eigenschaften können auch andere lokale Eigenschaften eines stochastischen Datensatzes Eingangsgrößen für die Beurteilung der Rauhigkeit des Bodens liefern und damit zur erfindungsgemäßen Klassifikation der Landefläche verwendet werden.

Die entsprechenden Kriterien sollten vorteilhaft auf die Eigenschaften, d.h. die Messungenauigkeiten und damit die zugrundeliegenden stochastischen Prozesse, des jeweiligen Sensors abgestimmt werden.

Die für das erfindungsgemäße Verfahren geeigneten statistischen Momente höherer Ordnung Varianz, Schiefheit und Kurtosis sind allgemein definiert über $m_n = \langle (h - \langle h \rangle)^n$,
wobei n für die Ordnung des Moments steht (z.B. n = 2 für die Varianz) und die eckigen Klammern, wie allgemein üblich, den Mittelwert oder Erwartungswert bezeichnen. Die Variable h steht in unserem Fall für die z-Komponente der 3D-Messwerte. Für diskrete Messwerte folgt daraus o.B.d.A. für die eindimensionale Problemstellung:

$$m_n = \sum_{i=a}^{b} \left( h_i - \langle h \rangle \right)^n, \text{ wobei } \langle h \rangle = \frac{\sum_{i=a}^{b} h_i}{b-a}$$

der Mittelwert zwischen dem Index a und b über die diskreten Höhenwerte $h_i$ ist.

In der Praxis erweist es sich als vorteilhaft, die Mittelungs- und Berechnungsfenster nicht durch die Anzahl an Messwerten, sondern durch räumliche Kriterien, d.h. Abstände zu begrenzen.

Da man in der beschriebenen Problemstellung lokal stark begrenzte Störungen auf einer eigentlich ebenen Fläche finden muss, bevorzugt das erfindungsgemäße Verfahren unterschiedliche Mittelungsbereiche bei der Berechnung des Mittelwerts der Höhenverteilung einerseits und der Berechnung der zugehörigen statistischen Momente andererseits:

$$m_n = \sum_{i=a+x}^{b-x} \left( h_i - \langle h \rangle \right)^n \text{ mit } \langle h \rangle = \frac{\sum_{i=a}^{b} h_i}{b-a},$$

wobei für die statischen Größen höherer Ordnung ein um $2 \cdot x$ kleinerer Mittelungsbereich als für den Erwartungswert gewählt wird.

Exemplarisch sei der Weg der Ermittlung der Rauhigkeit R(x), welche die Eingangsgröße für die Klassifikation bildet, am Beispiel der in Fig. 4 dargestellten Simulation einer Holzkiste bei 100 m Entfernung gezeigt. Als Maß für die Messwertdichte dient die folgende Berechnungsabfolge:

1. berechne die Anzahl an Messpunkten in einem lokalen Bereich, $\hat{d}_i$
2. Suche nach Peaks in der lokalen Anzahl der Messpunkte, gefolgt von Nullwerten in dieser Anzahl an Messpunkten

$$d_i = \begin{cases} \hat{d}_i, wenn & \hat{d}_i > thresh_{peak} \wedge \hat{d}_{i+1} < thresh_s \\ 0 & sonst \end{cases},$$

wobei $thresh_{peak}$ einen Mindestwert (Schwellwert) für einen Peak an der Vorderkante eines Hindernisses und $thresh_s$ einen Maximalwert (Schwellwert) für Messwerte im Schattenbereich des Hindernisses darstellen.

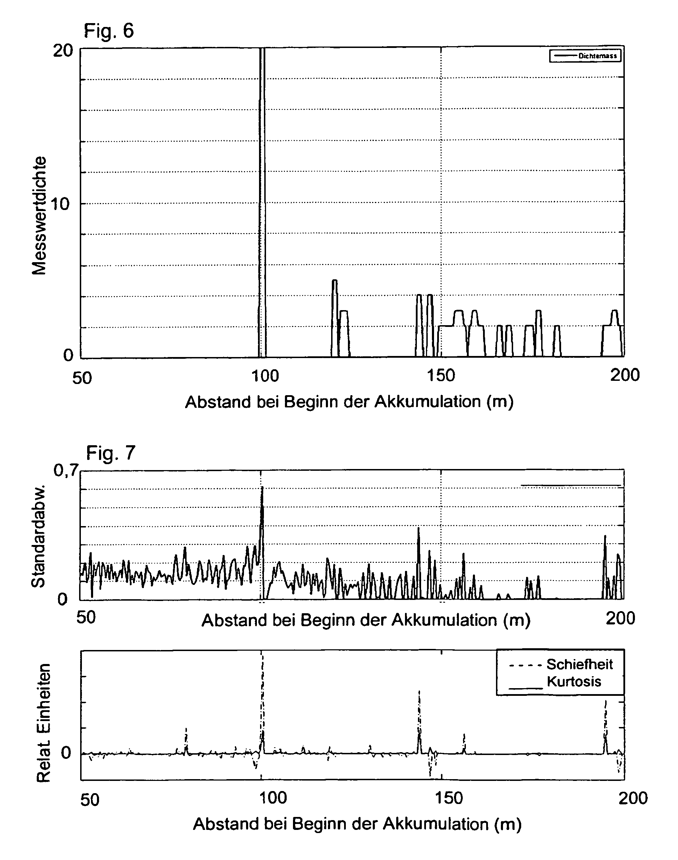

Fig. 6 zeigt die so ermittelte lokale Messpunktdichte über der Entfernungskoordinate.

Die höheren statistischen Momente für den gleichen simulierten Koordinatenbereich zeigt die folgende Fig. 7.

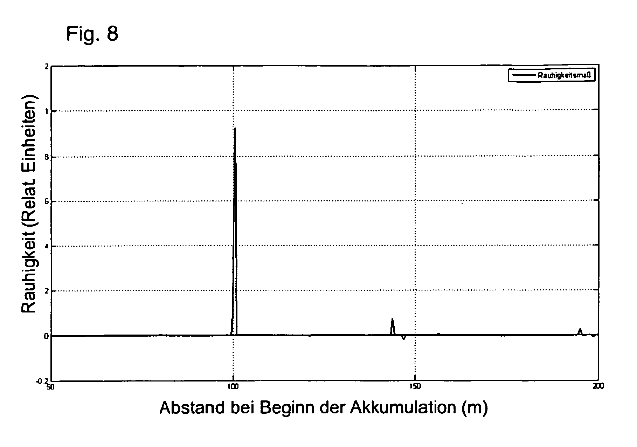

Berechnet man nun aus diesen Größen die oben definierte Rauhigkeit als Produkt der statistischen Einzelgrößen von lokaler Messwertdichte, lokaler Standardabweichung und lokaler Schiefheit, so ergeben sich die in der Fig. 8 dargestellten Werte. Man erkennt den ausgeprägten Peak am Orte des Hindernisses bei der Koordinate 100 m.

Anstatt der Berechnung eines komplexen Rauhigkeitsmaßes, welches dann mittels eines klassischen Klassifikators bewertet wird, können alternativ für die einzelnen Flächenelemente der zur Landung ausgewählten Bodenfläche die lokale Messwertdichte und statistischen Eigenschaften auch direkt als Eingangsgrößen für ein Neuronales Netzwerk oder einen Fuzzy Logic-Klassifikator verwendet werden.

Das Ergebnis des erfindungsgemäßen Verfahrens ist sowohl im Falle der Verwendung eines klassischen Klassifikators wie auch im zuletzt genannten Fall der Verwendung eines Neuronalen Netzwerks oder eines Fuzzy Logic-Klassifikators eine lokale Einstufung bzw. Klassifikation der Bodenfläche. So können im einfachsten Falle für jedes Flächenelement nur zwei Klassen zugelassen sein, also "geeignet" oder "ungeeignet". In einer weiteren Ausführung werden auch Zwischenstufen zugelassen, um den Grad der Eignung von "völlig ungeeignet" über mehreren Zwischenstufen bis zu "sehr gut geeignet" zu klassifizieren.

Diese Einstufung jedes Flächenelements kann zur intuitiven Darstellung der gesamten Boden- oder Landefläche in Abhängigkeit von der lokalen Bodenbeschaffenheit in einem synthetischen Sichtsystem verwendet werden.

Hier sind, je nach Anwendungsfall, verschiedene Ausführungen sinnvoll. So kann ein einziges als "ungeeignet" eingestuftes Flächenelement dazu führen, dass in der Darstellung die gesamte Boden- oder Landefläche als "ungeeignet" kenntlich gemacht wird. Für andere Anwendungen hingegen kann es sinnvoll sein, die Anzeige der gesamten Boden- oder Landefläche als "ungeeignet" erst dann zu wählen, wenn eine hinreichende Anzahl von Flächenelementen durch das erfindungsgemäße Klassifikationsverfahren als "ungeeignet" oder "potentiell ungeeignet" eingestuft wurden.

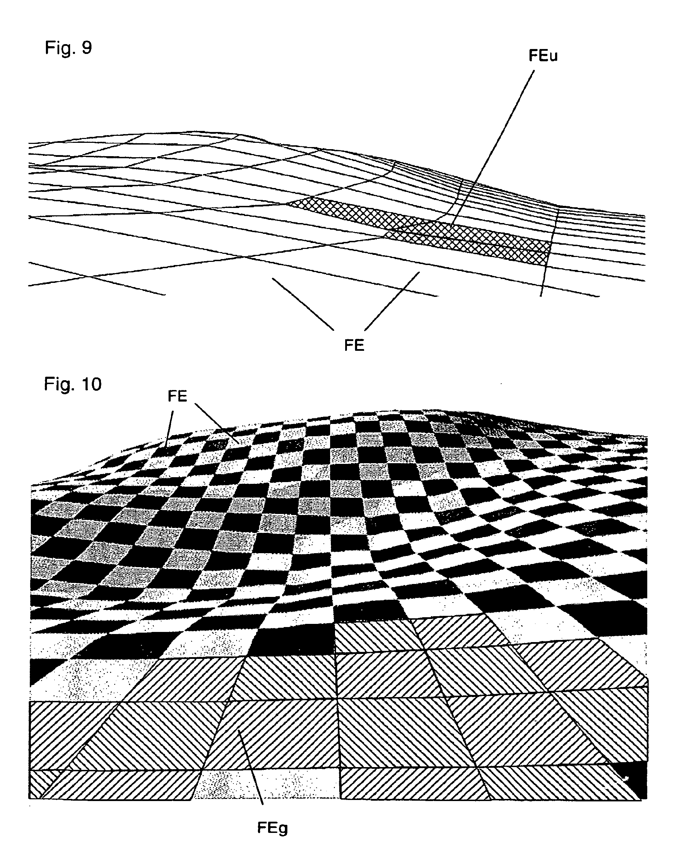

Die Eignung zur Landung wird dann als Markierung, Texturierung, Einfärbung oder sonstige Kenntlichmachung der Darstellung des entsprechenden Flächenelements überlagert. Fig. 9 zeigt hierzu ein Beispiel. Das dargestellte Gelände ist in diesem Beispiel in Form von einzelnen, viereckigen Flächenelementen FE mit abwechselnder farblicher Markierung grau/weiß nach Art eines Schachbrettmusters dargestellt. Die erfindungsgemäß als "ungeeignet" klassifizierten Flächenelemente FEu sind schraffiert gekennzeichnet, wobei diese Schraffur dem Schachbrettmuster überlagert ist.

Auch eine im Vergleich zu Fig. 9 invertierte Darstellung kann von Vorteil sein. Eine solche Ausführung ist in Fig. 10 dargestellt. Hierbei werden nur diejenigen Flächenelemente FE speziell markiert, die aufgrund ihrer erfindungsgemäß berechneten geringen Rauhigkeit als für eine Landung geeignet klassifiziert wurden. Im Beispiel der Fig. 10 sind die als "geeignet" eingestuften Flächenelemente FEg mittels Schraffur gekennzeichnet

Das erfindungsgemäße Verfahren ist gegen den aktuellen Trend bei den graphischen Darstellungen auf "Synthetic Vision Displays" in Luftfahrzeugen nicht darauf fokussiert, immer weitere Einzelheiten und Details, und diese möglichst hochaufgelöst, anzuzeigen. Vielmehr geht die Erfindung in die entgegen gesetzte Richtung, d.h. es wird eine stark vereinfachte, symbolhafte Sicht mit eindeutiger Markierung von geeigneten, hindernisfreien bzw. ungeeigneten Teilflächen vorgeschlagen. Insofern folgt die Erfindung dem Konzept einer verstärkten Abstraktion und Reduktion der darzustellenden Informationen auf das Wesentliche.

Die erfindungsgemäß erzeugten Klassifikationswerte der Flächenelemente können in einer besonders vorteilhaften Ausführung auch an ein automatisches Landesystem übergeben werden.

**Patentansprüche**

1. Verfahren zur Beurteilung einer Bodenfläche auf deren Eignung als Lande-zone oder Rollfläche für Luftfahrzeuge, durch die folgenden Verfahrensschritte gekennzeichnet:

   - Erzeugung von dreidimensionalen Daten der Bodenfläche in mehreren Messzyklen eines radar- oder lasergestützten 3D Sensors, wobei die Messungen unter spitzwinkligem Einfall der Messstrahlen stattfinden, so dass der schleifende Einfall der Messstrahlen in Relation zur Bodenfläche und den dadurch erzeugten Messdatenlücken aufgrund von Abschattungseffekten durch vorhandene Nichtboden-Objekte, z.B. Steinen oder Gräben, eine Veränderung der lokalen Messwertdichten sowie eine Veränderung der statistischen Eigenschaft höherer Ordnung, wie Varianz, Schiefheit und Kurtosis, erzeugt,
   - Ermittlung der räumlichen Messwertdichte der dreidimensionalen Daten sowie mindestens einer statistischen Eigenschaft höherer Ordnung der dreidimensionalen Daten und daraus Erzeugung eines Maßes für die lokale Rauhigkeit der Bodenfläche durch eine Verknüpfung der Messwertdichte mit der mindestens einen statistischen Eigenschaft höherer Ordnung der dreidimensionalen Daten, wobei die Verknüpfung eine Addition oder eine Multiplikation oder eine Kombination aus Addition und Multiplikation ist,
   - Klassifikation der einzelnen Flächenelemente eines auf den gemessenen dreidimensionalen Daten beruhenden synthetischen Modells der Bodenfläche mittels eines numerischen Klassifikators auf Basis der erzeugten Rauhigkeitswerte nach dem Grad ihrer Eignung als Lande- oder Rollfläche.

2. Verfahren nach Anspruch 1, **dadurch gekennzeichnet, dass** als statistische Eigenschaften höherer Ordnung der dreidimensionalen Daten ein statistisches Moment mit n>2 entsprechend der folgenden Formel benutzt wird:

$$m_n = \left\langle \left( h - \langle h \rangle \right)^n \right\rangle,$$

   wobei $\langle h \rangle$ der Mittelwert der dreidimensionalen Daten $h$ ist.

3. Verfahren nach Anspruch 2, **dadurch gekennzeichnet, dass** der Wertebereich der dreidimensionalen Daten $h$ bei der Berechnung des Mittelwerts $\langle h \rangle$ geringer gewählt wird als bei der Berechnung der zugehörigen statistischen Moments $m_n$.

4. Verfahren nach einem der vorangehenden Ansprüche, **dadurch gekennzeichnet, dass** die Klassifikationswerte der einzelnen Flächenelemente bei der Erzeugung einer synthetischen Ansicht der Bodenfläche verwendet werden.

5. Verfahren nach Anspruch 4, **dadurch gekennzeichnet, dass** die als Lande- oder Rollfläche geeigneten Flächenelemente in der synthetisch erzeugten Ansicht der Bodenfläche kenntlich gemacht werden.

6. Verfahren nach Anspruch 4, **dadurch gekennzeichnet, dass** die nicht als Lande- oder Rollfläche geeigneten Flächenelemente in der synthetisch erzeugten Ansicht der Bodenfläche kenntlich gemacht werden.

7. Verfahren nach einem der Ansprüche 4 bis 6, **dadurch gekennzeichnet, dass** in der synthetisch erzeugten Ansicht der Bodenfläche die gesamte Bodenfläche als nicht geeignet kenntlich gemacht wird, falls eine bestimmte Mindestanzahl von Flächenelementen n mit $n \geq 1$ erreicht oder übertroffen wird, die als nicht als Lande- oder Rollfläche geeignet klassifiziert wurden.

8. Verfahren nach einem der vorangehenden Ansprüche, **dadurch gekennzeichnet, dass** die Klassifikationswerte der Flächenelemente an ein automatisches Landesystem übergeben werden.

9. Verfahren zur Beurteilung einer Bodenfläche auf deren Eignung als Lande- oder Rollfläche für Luftfahrzeuge, durch die folgenden Verfahrensschritte gekennzeichnet:

   - Erzeugung von dreidimensionalen Daten der Bodenfläche in mehreren Messzyklen eines radar- oder lasergestützten 3D Sensors, wobei die Messungen unter spitzwinkligem Einfall der Messstrahlen stattfinden, so dass der schleifende Einfall der Messstrahlen in Relation zur Bodenfläche und den dadurch erzeugten Messdatenlücken aufgrund von Abschattungseffekten durch vorhandene Nichtboden-Objekte, z.B. Steinen oder Gräben, eine Veränderung der lokalen Messwertdichten sowie eine Veränderung der statistischen Eigenschaft höherer Ordnung, wie Varianz, Schiefheit und Kurtosis, erzeugt,

- Ermittlung der räumlichen Messwertdichte der dreidimensionalen Daten sowie mindestens einer statistischen Eigenschaft höherer Ordnung der dreidimensionalen Daten,
- Eingabe der ermittelten Messwertdichte sowie der ermittelten mindestens einen statistischen Eigenschaft höherer Ordnung der dreidimensionalen Daten in ein neuronales Netzwerk oder einen Fuzzy-Logic-Klassifikator zur Klassifikation der einzelnen Flächenelemente eines auf den gemessenen dreidimensionalen Daten beruhenden synthetischen Modells der Bodenfläche nach dem Grad ihrer Eignung als Lande- oder Rollfläche.

**Claims**

1. Method for assessing a ground area for suitability as a landing zone or taxi area for aircraft, **characterized by** the following method steps:

   - production of three-dimensional data for the ground area in a plurality of measurement cycles in a radar-based or laser-based 3D sensor, wherein the measurements take place at an acute angle of incidence of the measurement beams, as a result of which the dragging incident of the measurement beams in relation to the ground area and the resultant measurement data gaps on account of shading effects from existent non-ground objects, e.g. stones or ditches, produces a change in the local measured-value densities and also a change in the higher-order statistical property, such as variance, obliqueness and kurtosis,
   - ascertainment of the spatial measured-value density of the three-dimensional data and also of at least one higher-order statistical property of the three-dimensional data and, on the basis thereof, production of a measure of the local roughness of the ground area by logically combining the measured-value density with the at least one higher-order statistical property of the three-dimensional data, the logic combination being addition or multiplication or a combination of addition and multiplication,
   - classification of the individual area elements of a synthetic model - based on the measured three-dimensional data - of the ground area using a numerical classifier on the basis of the roughness values produced according to the degree of suitability of said area elements as a landing area or taxi area.

2. Method according to Claim 1, **characterized in that** the higher-order statistical properties used for the three-dimensional data are a statistical moment where n > 2 in accordance with the following formula:

$$m_n = \left\langle \left( h - \langle h \rangle \right)^n \right\rangle ,$$

where $\langle h \rangle$ is the mean of the three-dimensional data $h$.

3. Method according to Claim 2, **characterized in that** the range of values for the three-dimensional data $h$ is chosen to be smaller for calculating the mean $\langle h \rangle$ than for calculating the associated statistical moment $m_n$.

4. Method according to one of the preceding claims, **characterized in that** the classification values for the individual area elements are used for producing a synthetic view of the ground area.

5. Method according to Claim 4, **characterized in that** the area elements which are suitable as a landing area or taxi area are identified in the synthetically produced view of the ground area.

6. Method according to Claim 4, **characterized in that** the area elements which are not suitable as a landing area or taxi area are identified in the synthetically produced view of the ground area.

7. Method according to one of Claims 4 to 6, **characterized in that** the entire ground area is identified as not suitable in the synthetically produced view of the ground area if a particular minimum number of area elements n where $n \geq 1$ is reached or exceeded which have been classified as not suitable as a landing area or taxi area.

8. Method according to one of the preceding claims, **characterized in that** the classification values for the area elements are transferred to an automatic landing system.

9. Method for assessing a ground area for suitability as a landing area or taxi area for aircraft, **characterized by** the following method steps:

- production of three-dimensional data for the ground area in a plurality of measurement cycles in a radar-based or laser-based 3D sensor, wherein the measurements take place at an acute angle of incidence of the measurement beams, as a result of which the dragging incident of the measurement beams in relation to the ground area and the resultant measurement data gaps on account of shading effects from existent non-ground objects, e.g. stones or ditches, produces a change in the local measured-value densities and also a change in the higher-order statistical property, such as variance, obliqueness and kurtosis,
- ascertainment of the spatial measured-value density of the three-dimensional data and also of at least one higher-order statistical property of the three-dimensional data,
- input of the ascertained measured-value density and also of the ascertained at least one higher-order statistical property of the three-dimensional data into a neural network or a fuzzy-logic classifier for the purpose of classifying the individual area elements of a synthetic model - based on the measured three-dimensional data - of the ground area according to the degree of suitability of said area elements as a landing area or taxi area.


**Revendications**

1. Procédé d'évaluation d'une surface du sol quant à son aptitude à être utilisée en tant que surface d'atterrissage ou de roulement pour aéronefs, **caractérisé par** les étapes de procédé suivantes :

- générer des données tridimensionnelles de la surface du sol sur plusieurs cycles de mesure d'un capteur 3D à base de radar ou de laser, dans lequel les mesures s'effectuent de manière à ce que les faisceaux de mesure soient incidents sous un angle aigu, de sorte qu'une incidence plus verticale des faisceaux de mesure par rapport à la surface du sol et que les lacunes de données de mesure ainsi générées du fait d'effets d'ombrage dus à la présence d'objets ne se trouvant pas au sol, par exemple, des roches ou des tranchées, génère une variation des densités locales de mesure et une variation de propriétés statistiques d'ordre supérieur, comme la variance, le coefficient d'asymétrie et le coefficient d'aplatissement,
- déterminer la densité spatiale de valeurs de mesure des données tridimensionnelles et au moins une propriété statistique d'ordre supérieur des données tridimensionnelles, et générer à partir de celle-ci une mesure de la rugosité locale de la surface du sol par une combinaison de la densité de mesure à ladite au moins une propriété statistique d'ordre supérieur des données tridimensionnelles, dans lequel la combinaison est une addition ou une multiplication ou une combinaison d'une addition et d'une multiplication,
- classer les éléments de surface individuels d'un modèle synthétique basé sur les données tridimensionnelles mesurées de la surface du sol au moyen d'un classificateur numérique sur la base de la rugosité générée selon le degré de son aptitude à être utilisée en tant que surface d'atterrissage ou de roulement.

2. Procédé selon la revendication 1, **caractérisé en ce qu'**on utilise en tant que propriétés statistiques d'ordre supérieur des données tridimensionnelles, un moment statistique avec n > 2 correspondant à la formule suivante :

$$m_n = \langle (h - \langle h \rangle)^n \rangle,$$

où $\langle h \rangle$ est la moyenne des données tridimensionnelles $h$.

3. Procédé selon la revendication 2, **caractérisé en ce que** la plage de valeurs des données tridimensionnelles $h$ est choisie lors du calcul de la valeur moyenne $\langle h \rangle$ de manière à ce qu'elle soit inférieure à celle obtenue lors du calcul du moment statistique associé $m_n$.

4. Procédé selon l'une quelconque des revendications précédentes, **caractérisé en ce que** les valeurs de classification des éléments de surface individuels sont utilisées lors de la génération d'une vue synthétique de la surface du sol.

5. Procédé selon la revendication 4, **caractérisé en ce que** les éléments de surface aptes à être utilisés en tant que surface de roulement ou d'atterrissage sont mis en évidence dans la vue générée synthétiquement de la surface du sol.

6. Procédé selon la revendication 4, **caractérisé en ce que** les éléments de surface qui ne sont pas aptes à être utilisés en tant que surface d'atterrissage ou de roulement sont mis en évidence dans la vue générée synthétiquement de la surface du sol.

7. Procédé selon l'une quelconque des revendications 4 à 6, **caractérisé en ce que**, dans la vue générée synthétiquement de la surface du sol, la totalité de la surface du sol est mise en évidence comme n'étant pas apte à être utilisée si un certain nombre minimum n d'éléments de surface, avec $n \geq 1$, est atteint ou dépassé, lesdits éléments ayant été classé comme n'étant pas aptes à être utilisés en tant que surface d'atterrissage ou de roulement.

8. Procédé selon l'une quelconque des revendications précédentes, **caractérisé en ce que** les valeurs de classification des éléments de surface sont transférées à un système d'atterrissage automatique.

9. Procédé d'évaluation d'une surface du sol quant à son aptitude à être utilisée en tant que surface d'atterrissage ou de roulement pour aéronefs, **caractérisé par** les étapes de procédé suivantes :

- générer des données tridimensionnelles de la surface du sol sur plusieurs cycles de mesure d'un capteur 3D à base de radar ou de laser, dans lequel les mesures s'effectuent de manière à ce que les faisceaux de mesure soient incidents sous un angle aigu, de sorte qu'une incidence plus verticale des faisceaux de mesure par rapport à la surface du sol et que les lacunes de données de mesure ainsi générées du fait d'effets d'ombrage dus à la présence d'objets ne se trouvant pas au sol, par exemple, des roches ou des tranchées, génère une variation des densités locales de mesure et une variation de propriétés statistiques d'ordre supérieur, comme la variance, le coefficient d'asymétrie et le coefficient d'aplatissement,
- déterminer la densité spatiale de mesure des données tridimensionnelles et au moins une propriété statistique d'ordre supérieur des données tridimensionnelles,
- fournir en entrée la densité de valeurs de mesure déterminée et ladite au moins une propriété statistique déterminée d'ordre supérieur des données tridimensionnelles à un réseau neuronal ou à un classificateur à logique floue pour la classification des éléments de surface individuels d'un modèle synthétique basé sur les données tridimensionnelles mesurées de la surface du sol selon le degré de son aptitude à être utilisée en tant que surface d'atterrissage ou de roulement.

Fig. 1

Fig. 2

Fig. 3

Einzelstrahl des 3D-Sensors

Schattenbereich ohne
Sensormesswerte

Hindernis/Unebenheit    Bodenfläche

H

## Fig. 4

Häufung

Schatten wurf

Gemessene Höhe (m)

Messwerte

Abstand bei Beginn der Akkumulation (m)

## Fig. 5

Schatten wurf

Gemessene Höhe (m)

Messwerte

Abstand bei Beginn der Akkumulation (m)

Fig. 6

Fig. 7

Fig. 8

Fig. 9

FEu

FE

Fig. 10

FE

FEg

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004051625 B4
- EP 2182326 A1
- WO 2008018906 A2

**In der Beschreibung aufgeführte Nicht-Patentliteratur**

- Beyond Brownout. *Aviation Week & Space Technology,* 06. April 2009, 44, 45
- **DYLAN KLOMPARENS.** AUTOMATED LANDING SITE EVALUATION FOR SEMI-AUTONOMOUS UNMANNED AERIAL VEHICLES. *INTERNET CITATION,* 20. August 2008, 1-129, http://scholar.lib.vt.edu/theses/available/etd-08192008-231631/unrestricted/Thesis.pdf